# EUROPÄISCHE PATENTSCHRIFT

(11) **EP 3 669 133 B1**
(45) Veröffentlichungstag und Bekanntmachung des Hinweises auf die Patenterteilung: **02.06.2021**
(21) Anmeldenummer: 18750187.9
(22) Anmeldetag: 03.08.2018
(51) Int. Cl.: F28F 1/02, F28F 1/24, F28F 1/26

(54) **WÄRMEÜBERTRAGER**
HEAT EXCHANGER
ÉCHANGEUR DE CHALEUR

(30) Priorität: 16.08.2017 DE 102017214261
(43) Veröffentlichungstag der Anmeldung: 24.06.2020
(73) Patentinhaber: Helmholtz-Zentrum Dresden - Rossendorf e.V., 01328 Dresden (DE); Technische Universität Dresden, 01069 Dresden (DE)
(72) Erfinder: UNGER, Sebastian, 01277 Dresden (DE); HAMPEL,Uwe, 01454 Radeberg (DE)
(74) Vertreter: Kailuweit & Uhlemann Patentanwälte Partnerschaft mbB
(86) Internationale Anmeldenummer: PCT/EP2018/071098
(87) Internationale Veröffentlichungsnummer: WO 2019/034450

(56) Entgegenhaltungen:
- WO-A1-2006/056190
- WO-A1-2012/014934
- DE-U1-202004 018 924
- GB-A- 436 656

## Beschreibung

Die vorliegende Erfindung betrifft einen Wärmeübertrager mit wenigstens einer Trennwand, von der auf wenigstens einer Seite abstehende Oberflächenelemente angeordnet sind, die von einem Fluid umströmbar sind.

Wärmeübertrager werden im Stand der Technik in verschiedenen Ausführungen zur Übertragung von Wärme von einem Medium auf ein anderes Medium eingesetzt, wobei die beiden Medien körperlich getrennt bleiben. Nach der Art der Medien, die auch als Fluide bezeichnet werden, kann man Wärmeübertrager beispielsweise in Flüssigkeits-Gas-Wärmeübertrager, Flüssig-Flüssig-Wärmeübertrager und in Gas-Gas-Wärmeübertrager unterteilen. Im Bereich der Flüssigkeits-Gas-Wärmeübertrager sind Rohrbündelwärme-übertrager mit Rippenrohren bekannt, die auch als Rippenrohrwärmeübertrager bezeichnet werden. Dabei strömt die Flüssigkeit im Inneren des Rohres und das Gas umströmt das Rohr auf der Außenseite. Die Wärmeübergangskoeffizienten von Flüssigkeiten sind hierbei um ein bis zwei Größenordnungen größer als bei Gasen. Die Oberfläche des Rohres wird daher außen durch Rippen vergrößert wodurch ein reduzierter Wärmeübergangswiderstand auf der Gasseite dieses Wärmeübertragers vorliegt. Dadurch sind die Wärmeübergangswiderstände für beide Medien klein. Die Rippen von Rippenrohren sind im Stand der Technik häufig als voluminöse Ansätze ausgeführt, die mit der Trennwand des Wärmeübertragers verbunden sind. Große Volumen der Rippen sind mit hohen Materialkosten bei der Herstellung und einem großen Gewicht der Wärmeübertrager gekoppelt. Hohe Gewichte können nachteilig und unerwünscht sein, beispielsweise beim Einsatz in Fahrzeugen. Ein hoher Materialverbrauch ist nachteilig mit entsprechend hohen Kosten verbunden. Eine große Wandstärke der einzelnen Rippen, im Folgenden Rippendicke genannt, führt bei gleichem Abstand der Rippen zueinander zu einer niedrigeren Anzahl von Rippen pro Rippenrohr als bei dünneren Rippen. Mit einer großen Rippendicke sind begrenzte Wärmeübertragungsoberflächen und niedrige thermische Gesamtleistungen verbunden.

Das Dokument GB 436,656 offenbart Wärmeübertrager gemäß dem Oberbegriff des Anspruchs 1 mit Rippenrohren, bei denen die Rippen in Form von dreidimensional ausgestalteten Oberflächenelementen eine vergrößerte Oberfläche aufweisen. Nachteilig an diesen Rippenrohren ist die Massenvergrößerung, die proportional zu den Volumen der dreidimensionalen Strukturen ist sowie eine begrenzte thermische Gesamtleistung der Wärmeübertrager.

Es ist daher die Aufgabe der vorliegenden Erfindung, massearme Wärmeübertrager mit großer thermischer Leistung vorzuschlagen.

Diese Aufgabe wird durch einen Wärmeübertrager der eingangs angegebenen Art gelöst, der außerdem so ausgebildet ist, dass die Oberflächenelemente flossenartig von der Trennwand abstehend ausgebildet sind und die Oberflächenelemente Verstärkungswülste aufweisen, wobei sich die Verstärkungswülste bis zu der Trennwand hin erstrecken. "Flossenartig" bedeutet, dass sich die Oberflächenelemente in einem Winkel größer Null und kleiner oder gleich 90° von der Trennwand aus erstrecken und dass die Dicke der Oberflächenelemente, auch als Wandstärke bezeichnet, klein gegenüber der Fläche der Oberflächenelemente ist, wobei die Dicke parallel zur Trennwand und senkrecht zur Fläche der Oberflächenelemente gemessen wird. Vorzugsweise erstrecken sich die Oberflächenelemente senkrecht von der Trennwand aus. Die Oberflächenelemente sind starr mit der Trennwand verbunden und in sich selbst ebenfalls starr.

Die als Rippen des Wärmeübertragers dienenden Oberflächenelemente sind in dünnwandige Flächenbereiche mit entsprechend geringem Volumen und geringer Masse unterteilt. Die Unterteilung erfolgt durch Verstärkungswülste mit größeren Querschnitten zur erhöhten Wärmeleitung. Das heißt, dass die Verstärkungswülste eine größere Dicke aufweisen als die Oberflächenbereiche. Die Verstärkungswülste sind dabei so ausgerichtet, dass sie die Wärme zu der zwischen den beiden Medien befindlichen Trennwand hin- oder wegleiten, je nachdem wie der Temperaturgradient verläuft.

Bei dem Wärmeübertrager kann es sich um einen Flüssigkeits-Gas-Wärmeübertrager, beispielsweise einen Wasser-Luft-Wärmeübertrager handeln. Der Wärmeübertrager, kann als ein Rippenrohrwärmeübertrager ausgebildet sein, wobei die Trennwand zwischen dem ersten Fluid (z.B. Wasser) und dem zweiten Fluid (z.B. Luft) durch die Rohrwand der Rohre ausgebildet ist. Die Fluide Wasser und Luft sind als reine Beispiele zu verstehen, die auch für andere flüssige und gasförmige Fluide stehen können. Die Rohrinnenseiten können in Kontakt mit einem flüssigen, ersten Fluid stehen. Der Wärmeübergangswiderstand ist an dieser Grenz-fläche durch den flüssigen Aggregatzustand des ersten Fluids klein. Entsprechend bedarf es auf der Innenseite der Rohre keiner Oberflächenvergrößerung. Im Kreuzstrom wird dazu ein Gasstrom geführt, dessen Hauptströmungsrichtung senkrecht zur Rohrachse verläuft. Die Grenzflächen an den Außenseiten der Rohre, die im Kontakt mit dem gasförmigen, zweiten Fluid stehen, haben einen höheren Wärmeübergangswiderstand pro Flächeneinheit der Trenn-Wandoberfläche. Um dennoch einen kleinen Wärmeübergangswiderstand zu erreichen, ist die Oberfläche der Trennwand des erfindungsgemäßen Wärmeübertragers auf wenigstens dieser Seite durch Rippen in Form der beschriebenen Oberflächenelemente vergrößert. Solche oberflächenvergrößernden Oberflächenelemente können in anderen erfindungsgemäßen Wärmeübertragern auch auf beiden Seiten der Trennwand angeordnet sein, beispielsweise in einem Gas-Gas-Wärmeübertrager.

Die folgenden Ausführungen beziehen sich hauptsächlich auf einen Flüssigkeit-Gas-Wärmeübertrager mit nur einseitig auf der Gasseite vergrößerter Oberfläche. Die Ausführungen gelten mit entsprechenden Abwandlungen jedoch auch für andere Wärmeübertrager mit beidseitig vergrößerten Oberflächen der Trennwand, für die kein Ausführungsbeispiel explizit benannt ist.

Der erfindungsgemäße Wärmeübertrager kann konkret ein Rippenrohrwärmeübertrager sein mit wenigstens einem Rohr zur Durchströmung eines ersten Fluides auf der Innenseite des Rohres und zur Umströmung eines zweiten Fluides auf der Außenseite des Rohres, welche durch Oberflächenelemente, welche bei Rippenrohrwärmeübertragern als Rippen bezeichnet werden, vergrößert wird. Die Oberflächenelemente bzw. Rippen sind flossenartig von dem Rohr abstehend ausgebildet und weisen Verstärkungswülste auf, wobei sich die Verstärkungswülste von dem Rohr wegführend erstrecken.

Die Wärmeleitfähigkeit der Rippen von Rippenrohren ist eine Materialeigenschaft des für die Herstellung der Rippen verwendeten Materials. Für einen großen Wärmefluss wird eine große Querschnittsfläche quer zu der Wärmeleitungsrichtung benötigt.

Der erfindungsgemäße Wärmeübertrager verwendet als Rippen flossenartige Oberflächenelemente, die voneinander beabstandete Verstärkungswülste und zwischen den Verstärkungswülsten Flächenbereiche geringer Dicke aufweisen. Die Flächenbereiche haben wegen ihrer geringen Dicken einen hohen Wärmeleitwiderstand. Die Verstärkungswülste haben hingegen einen größeren Querschnitt und einen geringen Wärmeleitwiderstand, der auch für den Wärmetransport über größere Längen ausreichend klein ist. Die Wärmeleitung in diesen Oberflächenelementen erfolgt teilweise zweistufig: Hat beispielsweise das zweite Fluid auf der Außenseite des Rohres ein niedrigeres Temperaturniveau als das Fluid auf der Innenseite des Rohres, so erfolgt die Wärmeleitung zunächst von der Rohrwand oder sonstigen Trennwänden in die Verstärkungswülste und dort weiter in die Flächenbereiche zwischen den Verstärkungswülsten. In der unmittelbaren Umgebung der Rohrwand kann auch eine direkte Wärmeeinleitung von der Rohrwand in die Flächenbereiche dominieren, während die Wärme nur anteilig zu den Verstärkungswülsten geleitet wird. Die Verstärkungswülste stehen mit ihrem Querschnitt im Kontakt mit dem Rohr bzw. der Rohrwand oder sonstigen Trennwand und erstrecken sich von dem Rohr weg. Das heißt mit anderen Worten, die Verstärkungswülste sind orthogonal oder in einem Winkel zu der Rohrwand angeordnet, aber nicht parallel oder anderweitig beabstandet zu der Rohrwand.

Bei einem runden Rohr können sich die Verstärkungswülste radial und bei flachen Trennwänden orthogonal zur Trennwand erstrecken, sodass die Wärme auf einem kurzen Weg von der Trennwand oder zu der Trennwand geleitet wird. Beispielsweise können die Verstärkungswülste aus geometrischen oder strömungstechnischen Gründen auch anders zum Rohr hin verlaufen. Die Verstärkungswülste der Oberflächenelemente der erfindungsgemäßen Wärmeübertrager können sich im Wesentlichen durch das ganze Oberflächenelement bis zu einer Außenkante des Oberflächenelements erstrecken. Alternativ können die Verstärkungswülste auch nur auf einer trennwandseitigen Teilfläche des Oberflächenelements ausgebildet sein und vor der von der Trennwand entfernten Außenkante des Oberflächenelements enden. Der Querschnitt der Verstärkungswülste kann auch zur Trennwand hin mit zunehmender Größe ausgebildet sein. Die Verstärkungswülste können eine kreisrunde oder ovale Querschnittsformen haben. Es sind aber auch andere Querschnittsformen möglich. Der Durchmesser kreisrunder Verstärkungswülste kann mindestens doppelt so groß ausgebildet sein wie die Dicke von Flächenbereichen zwischen den Verstärkungswülsten.

Die Verstärkungswülste benachbarter Oberflächenelemente können versetzt zueinander angeordnet sein. Ein quer zu den Verstärkungswülsten strömendes Fluid, beispielsweise Luft, wird an den Verstärkungswülsten abgelenkt. Durch einen Versatz von in benachbarten Oberflächenelementen befindlichen Verstärkungswülsten kann eine wellenförmige Fluid-Strömung erzeugt werden. Die wellenförmige Fluid-Strömung kann auch als eine strömungsgünstige Turbulenz betrachtet werden. Durch Turbulenzen kann eine erhöhte konvektive Wärmeübertragung von den Oberflächenelementen und Trennwänden an das umströmende Fluid oder umgekehrt erreicht werden. Die gute Wärmeleitung infolge des Vorhandenseins der Verstärkungswülste führt zu einer relativ großen Temperaturdifferenz zwischen dem Oberflächenelement und dem das Oberflächenelement umgebenden Medium. In Folge der großen Temperaturdifferenz wird auch ein großer Wärmefluss zwischen dem Oberflächenelement und dem umgebenden Medium und in der Folge eine große thermische Leistung des erfindungsgemäßen Wärmeübertragers erreicht. Benachbarte Oberflächenelemente können an einer Trennwand befestigt sein, beispielsweise auf einem Rohr. Es können aber auch von benachbarten Trennwänden ausgehende Oberflächenelemente einander kammartig umgreifen.
Gemäß einer Ausgestaltung des erfindungsgemäßen Wärmeübertragers ist das Rohr eines Rippenrohrwärmeübertragers als ein Ovalrohr ausgebildet, dessen Querschnitt aus zwei Halbkreisen und zwei die Halbkreise verbindenden Geraden gebildet ist Die Oberflächenelemente besitzen eine ovale Form und sind in einer orthogonalen Ebene, d.h. orthogonal zur Rohrachse, angeordnet. An den Ovalrohren kann das Konzept der vorliegenden Erfindung vorteilhaft umgesetzt werden. An den Oberflächenbereichen der geraden Bereiche des Ovalrohres können die Verstärkungswülste nahezu senkrecht zur Strömung, parallel und in konstantem Abstand zueinander positioniert werden. Dabei ist eine maximierte konvektive Wärmeübertragung zwischen benachbarten Oberflächenelementen erreichbar. Durch die versetzten Verstärkungswülste in einander gegenüberstehenden, d.h. zu einander benachbarten, Oberflächenelementen ist eine wellenförmige Strömung ausbildbar, die die Wärmeübertragung weiter verbessert. Die Länge der Geraden des Ovalrohrquerschnitts kann mindestens einmal so groß wie der Durchmesser dessen Halbkreises, insbesondere 2,5-mal so groß, ausgebildet sein. An den großen geraden Bereichen des Ovalrohres und den daran angrenzenden Bereichen des Oberflächenelements kann vorteilhaft große Wärmeübertragung erreicht werden. Aus mechanischen und strömungstechnischen Gründen innerhalb des Rohres kann das Ovalrohr bzw. das ovale Flachrohr nicht beliebig flach ausgebildet werden.

Die einzelnen vorgestellten Aspekte von Ausgestaltungen des erfindungsgemäßen Wärmeübertragers können auch anderweitig im Ermessen eines Fachmanns kombiniert werden, ohne den Rahmen der hier vorgestellten und beanspruchten Erfindung zu verlassen. Nacheinander beschriebene Merkmale dürfen nicht als untrennbare Merkmalskombination missverstanden werden, sondern sind als Aufzählung einzelner Merkmale zu verstehen.

Die vorliegende Erfindung soll im Folgenden anhand von Figuren näher erläutert werden, wobei
- Fig. 1: einen erfindungsgemäßen Wärmeübertrager in einer perspektivischen Ansicht,
- Fig. 2: eine Fluidströmung an dem erfindungsgemäßen Wärmeübertrager,
- Fig. 3: eine Ansicht eines erfindungsgemäßen Rippenrohrwärmeübertragers in Blickrichtung entlang des Rohres und
- Fig. 4: eine Ansicht des erfindungsgemäßen Rippenrohrwärmeübertragers in Blickrichtung quer zum Rohr zeigt.

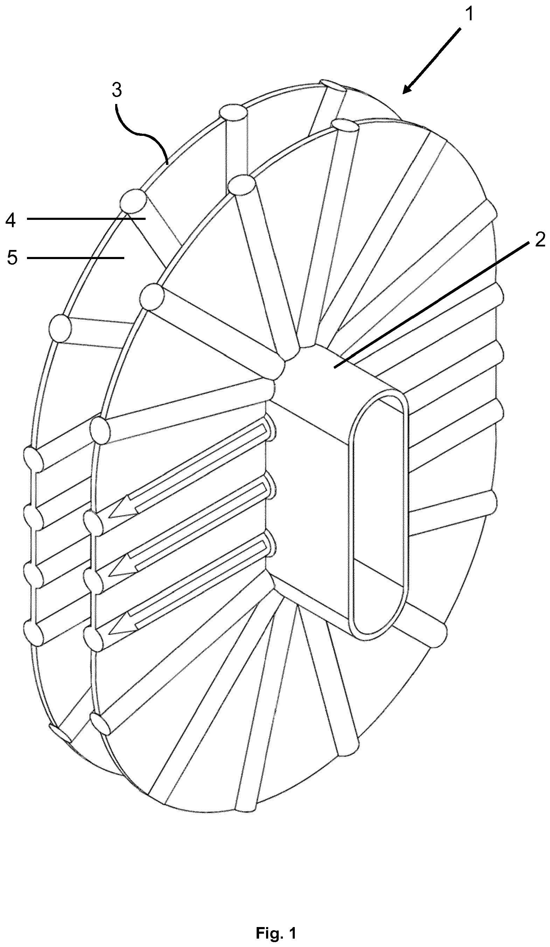

Figur 1 zeigt einen erfindungsgemäßen Wärmeübertrager 1, konkret einen Rippenrohrwärmeübertrager, ausschnittsweise in einer perspektivischen Ansicht. Im Zentrum des dargestellten Gegenstandes ist das ovale Rohr 2 zu erkennen. Die Wände des Rohres 2 sind Trennwände zwischen einem ersten Fluid im Inneren des Rohres 2 und einem zweiten Fluid außerhalb des Rohres 2. Durch die Trennwand bzw. die Rohrwand wird Wärme zwischen dem ersten und dem zweiten Fluid ausgetauscht, ohne dass das erste und das zweite Fluid miteinander stofflich in Kontakt kommen. Außen weist das Rohr 2 oberflächenvergrößernde Rippen auf, die dem Rippenrohrwärmeübertrager seinen Namen geben. Bei dem hier dargestellten erfindungsgemäßen Wärmeübertrager 1 sind die mit dem Rohr verbundenen Rippen als volumenarme und im Wesentlichen zweidimensionale Oberflächenelemente 3 ausgebildet. Die Oberflächenelemente 3 weisen in dem dargestellten Ausführungsbeispiel stiftförmige Verstärkungswülste 4 mit rundem Querschnitt auf. Diese Verstärkungswülste 4 erstrecken sich von dem Rohr 2 bis zur Außenkante der Oberflächenelemente 3. Zwischen den Verstärkungswülsten 4 weist das Oberflächenelement 3 Flächenbereiche 5 auf, die eine geringere Dicke als die Verstärkungswülste 4 haben.

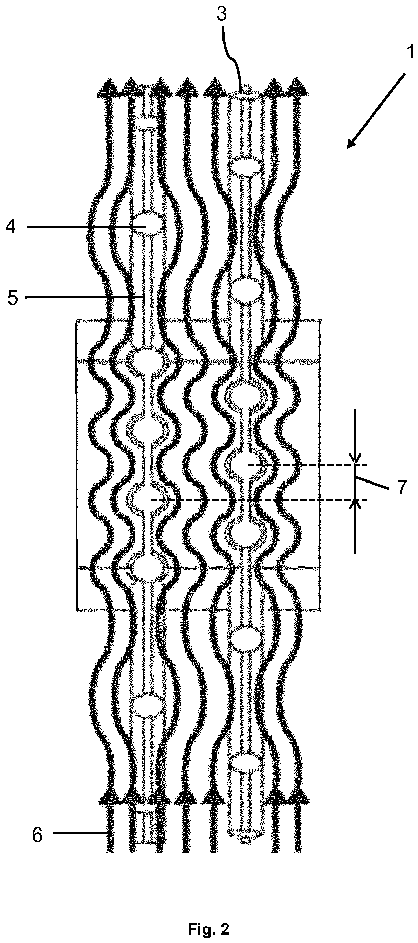

Figur 2 zeigt ausschnittsweise den Wärmeübertrager von Figur 1 schematisch in einer seitlichen Ansicht auf das Rohr 2. Gleiche Bezugszeichen in den Figuren bezeichnen gleiche oder ähnliche Elemente. Zur Vermeidung von Wiederholungen wird auf die Beschreibung von Figur 1 verwiesen. In Figur 2 ist schematisch anhand von Stromlinien 6 die Strömung des zweiten Fluids außerhalb des Rohres 2 dargestellt. Die Verstärkungswülste 4 stören eine laminare Strömung zwischen benachbarten Oberflächenelementen 3, indem sie Turbulenzen verursachen. Die Turbulenzen verbessern den Wärmeübergang zwischen dem zweiten Fluid und dem Oberflächenelement 3. Auf der ebenen Seite des ovalen Rohres 2 sind die Verstärkungswülste 4 benachbarter Oberflächenelemente 3 parallel zueinander angeordnet. Außerdem sind sie in der Strömungsrichtung, die in der Darstellung von unten nach oben verläuft, jeweils mit einem Versatz 7 zueinander angeordnet. Durch den Versatz 7 überlagern sich die Turbulenzen an den einzehen Verstärkungswülsten 4 zu dem mit den Stromlinien 6 skizzierten strömungsgünstigen Wellenverlauf.

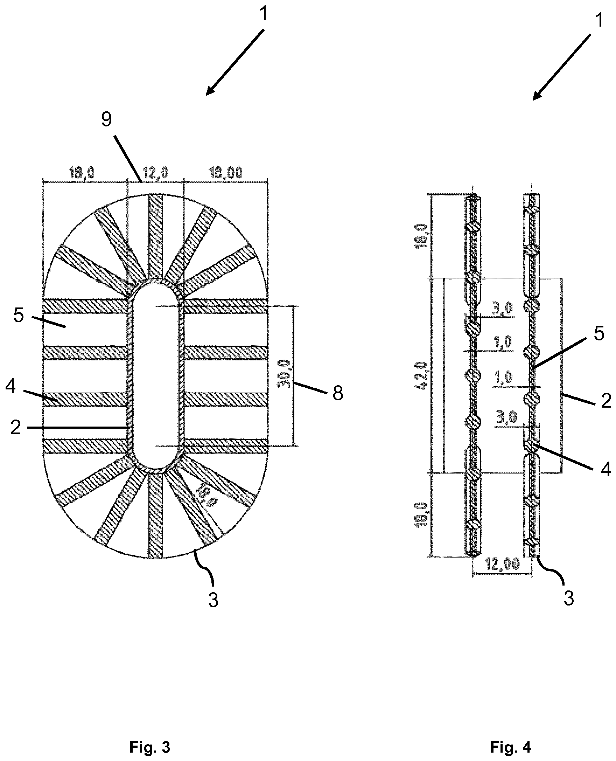

In den Figuren 3 und 4 ist ein ganz konkretes Bemessungsbeispiel des Rippenrohrwärmeübertragers von den Figuren 1 und 2 in zwei verschiedene Ansichten längs des Rohres 2 und quer dazu dargestellt. Das Rohr 2 ist hier als ein Ovalrohr ausgebildet, das der in Figur 2 dargestellten Strömung mit den Stromlinien 6 bei gleichem Querschnitt einen geringeren Widerstand entgegensetzt als ein rundes Rohr gleicher Querschnittsgröße. Das konkrete Ovalrohr hat einen Außendurchmesser 9 von 12 Millimetern seiner halbkreisförmigen Wandabschnitte und eine Länge 8 der geraden Seitenbereiche von 30 Millimetern. Für eine Skalierung des Rohres kann verallgemeinert werden, dass das Verhältnis von der geraden Länge 8 zu dem Durchmesser 9 2,5 beträgt. Die genaue Größe dieses Verhältnisses kann als ein Optimierungsparameter bei der Auslegung des Wärmeübertragers anhand vorgegebener Rahmenbedingungen genutzt werden. In Figur 4 ist zu sehen, dass die Flächenbereiche 5 eine geringe Dicke von nur 1 Millimeter haben und die Verstärkungswülste 4 mit einer maximalen Dicke von 3 mm einen im Vergleich mit den Flächenbereichen 5 vergrößerten Querschnitt bzw. eine dreimal so große Dicke besitzen.

In dem Ausschnitt von Figur 4 ist zu erkennen, dass das linke Oberflächenelement 3 nur drei Verstärkungswülste 4 auf dem ebenen Oberflächenbereich des ovalen Rohres 2 aufweist. Das rechte Oberflächenelement 3 weist hingegen in dem gleichen Ausschnitt vier Verstärkungswülste 4 auf. Durch die unterschiedliche Anzahl der Verstärkungswülste 4 wird der Versatz 7 realisiert sowie letztlich auch der in Figur 2 skizzierte Strömungsverlauf mit den Stromlinien 6. Weiterhin sorgt der Versatz der Verstärkungswülste für unterschiedliche Temperaturprofile und damit zu großen Temperaturdifferenzen zwischen dem Fluid 2 und jeweis einem Oberflächenelement 3, weshalb große Wärmestromdichten möglich sind.

In den dargestellten Ausführungsbeispielen sind die benachbarten Oberflächenelemente 3 auf einem Rohr 2 montiert. In anderen, nicht dargestellten Beispielen sind benachbarte Oberflächenelemente 3 auf benachbarten Rohren 2 montiert und die Rippen benachbarter Rohre greifen kammartig ineinander ein. Weitere Ausführungsbeispiele kann ein Fachmann anhand der obigen Beispiele in Anpassung an eine gegebene Aufgabenstellung herleiten.

### Bezugszeichen

- 1: Wärmeübertrager
- 2: Rohr
- 3: Oberflächenelement
- 4: Verstärkungswulst des Oberflächenelements
- 5: Flächenbereich des Oberflächenelements
- 6: Stromlinien eines Fluids zwischen benachbarten Oberflächenelementen
- 7: Versatz von Verstärkungswülsten
- 8: Gerade des Ovalrohrquerschnitts
- 9: Durchmesser des Halbkreises im Ovalrohrquerschnitt

## Patentansprüche

1. Wärmeübertrager (1) mit wenigstens einer Trennwand und wenigstens von einer Seite der Trennwand abstehenden und die Oberfläche der Trennwand vergrößernden Oberflächenelementen (3), die von einem Fluid umströmbar sind, wobei die Oberflächenelemente (3) flossenartig von der Trennwand abstehend ausgebildet sind und die Oberflächenelemente (3) Verstärkungswülste (4) und zwischen den Verstärkungswülsten (4) befindliche Flächenbereiche (5) aufweisen, wobei sich die Verstärkungswülste (4) bis zu der Trennwand hin erstrecken, **dadurch gekennzeichnet, dass** die Verstärkungswülste (4) eine kreisrunde oder ovale Querschnittform haben.

2. Wärmeübertrager (1) nach Anspruch 1, **dadurch gekennzeichnet, dass** der Wärmeübertrager (1) ein Rippenrohrwärmeübertrager ist, mit wenigstens einem Rohr (2) zur Durchströmung eines ersten Fluids im Inneren des Rohres (2) und mit die Oberfläche des Rohres (2) außen vergrößernden Oberflächenelementen (3), die von einem zweiten Fluid im Kreuzstrom zum Fluid 1 umströmbar sind, wobei das Rohr (2) die Trennwand des Wärmeübertragers (1) bildet.

3. Wärmeübertrager (1) nach Anspruch 2, **dadurch gekennzeichnet, dass** sich die Verstärkungswülste (4) orthogonal zur Oberfläche des Rohres (2) erstrecken.

4. Wärmeübertrager (1) nach Anspruch 1, **dadurch gekennzeichnet, dass** sich die Verstärkungswülste (4) durch das ganze Oberflächenelement (3) bis zu einer Außenkante des Oberflächenelementes (3) erstrecken.

5. Wärmeübertrager (1) nach Anspruch 1, **dadurch gekennzeichnet, dass** die Verstärkungswülste (4) einen kreisrunden Querschnitt haben und der Durchmesser der Verstärkungswülste mindestens doppelt so groß wie die Dicke von den Flächenbereichen (5) zwischen den Verstärkungswülsten (4) der Oberflächenelemente (3) ist.

6. Wärmeübertrager (1) nach Anspruch 1, **dadurch gekennzeichnet, dass** die Verstärkungswülste (4) benachbarter Oberflächenelemente (3) versetzt zueinander angeordnet sind unter Ausbildung eines Versatzes (7) in einer Strömungsrichtung des zweiten Fluids zwischen den Oberflächenelementen (3).

7. Wärmeübertrager (1) nach Anspruch 2 und 6, **dadurch gekennzeichnet, dass** das Rohr (2) des Rippenrohrwärmeübertragers als ein Ovalrohr ausgebildet ist, dessen Querschnitt aus zwei Halbkreisen und zwei die Halbkreise verbindenden Geraden gebildet ist, die Oberflächenelemente (3) mit einer ovalen Form in einer zu einer Längsachse des Rohres orthogonalen Ebene angeordnet sind und
benachbarte Oberflächenelemente (3) parallel zueinander angeordnet sind.

8. Wärmeübertrager (1) nach Anspruch 7, **dadurch gekennzeichnet, dass** die Länge der Geraden (8) des Querschnitts des Ovalrohrs mindestens einmal so groß wie der Durchmesser (9) des Halbkreises des Querschnitts des Ovalrohrs, insbesondere 2,5-mal so groß ist.

## Claims

1. Heat exchanger (1) comprising at least one partition and surface elements (3) which project from at least one side of the partition and which enlarge the surface of the partition and around which a fluid can flow, the surface elements (3) being formed so as to project in the manner of fins from the partition and the surface elements (3) having reinforcement beads (4) and face regions (5) located between the reinforcement beads (4), the reinforcement beads (4) extending as far as the partition, **characterised in that** the reinforcement beads (4) have a circular or oval cross-sectional shape.

2. Heat exchanger (1) according to claim 1, **characterised in that** the heat exchanger (1) is a ribbed tube heat exchanger having at least one tube (2) for the flow of a first fluid inside the tube (2) and having surface elements (3) which enlarge the surface of the tube (2) on the outside and around which a second fluid can flow in the cross-flow to the fluid 1, the tube (2) forming the partition of the heat exchanger (1).

3. Heat exchanger (1) according to claim 2, **characterised in that** the reinforcement beads (4) extend orthogonally to the surface of the tube (2).

4. Heat exchanger (1) according to claim 1, **characterised in that** the reinforcement beads (4) extend through the entire surface element (3) as far as an outer edge of the surface element (3).

5. Heat exchanger (1) according to claim 1, **characterised in that** the reinforcement beads (4) have a circular cross section and the diameter of the reinforcement beads is at least twice as large as the thickness of the face regions (5) between the reinforcement beads (4) of the surface elements (3).

6. Heat exchanger (1) according to claim 1, **characterised in that** the reinforcement beads (4) of adjacent surface elements (3) are offset from one another so as to form an offset (7) in a flow direction of the second fluid between the surface elements (3).

7. Heat exchanger (1) according to either claim 2 and claim 6, **characterised in that** the tube (2) of the ribbed tube heat exchanger is formed as an oval tube, the cross section of which is formed from two semicircles and two straight lines connecting the semicircles, the surface elements (3) having an oval shape are arranged in a plane which is orthogonal to a longitudinal axis of the tube and
adjacent surface elements (3) are arranged in parallel with one another.

8. Heat exchanger (1) according to claim 7, **characterised in that** the length of the straight lines (8) of the cross section of the oval tube is at least as large as the diameter (9) of the semicircle of the cross section of the oval tube, in particular 2.5 times as large.

## Revendications

1. Échangeur de chaleur (1) comportant au moins une cloison et des éléments de surface (3) faisant saillie au moins d'un côté de la cloison et agrandissant la surface de la cloison, un fluide pouvant s'écouler autour de ceux-ci, les éléments de surface (3) faisant saillie de la cloison comme des ailerons et les éléments de surface (3) présentant des renflements de renforcement (4) et des zones de surface (5) situées entre les renflements de renforcement (4), les renflements de renforcement (4) s'étendant jusqu'à la cloison, **caractérisé en ce que** les renflements de renforcement (4) possèdent une forme de section transversale circulaire ou ovale.

2. Échangeur de chaleur (1) selon la revendication 1, **caractérisé en ce que** l'échangeur de chaleur (1) est un échangeur de chaleur à tubes à ailettes, comportant au moins un tube (2) permettant l'écoulement d'un premier fluide à l'intérieur du tube (2) et comportant des éléments de surface (3) agrandissant la surface du tube (2) à l'extérieur, un second fluide pouvant s'écouler autour de ceux-ci dans un flux croisé par rapport au premier fluide, le tube (2) formant la cloison de l'échangeur de chaleur (1).

3. Échangeur de chaleur (1) selon la revendication 2, **caractérisé en ce que** les renflements de renforcement (4) s'étendent orthogonalement à la surface du tube (2).

4. Échangeur de chaleur (1) selon la revendication 1, **caractérisé en ce que** les renflements de renforcement (4) s'étendent à travers tout l'élément de surface (3) jusqu'à un bord extérieur de l'élément de surface (3).

5. Échangeur de chaleur (1) selon la revendication 1, **caractérisé en ce que** les renflements de renforcement (4) possèdent une section transversale circulaire et que le diamètre des renflements de renforcement est au moins deux fois supérieur à l'épaisseur des zones de surfaces (5) entre les renflements de renforcement (4) des éléments de surface (3).

6. Échangeur de chaleur (1) selon la revendication 1, **caractérisé en ce que** les renflements de renforcement (4) des éléments de surface adjacents (3) sont disposés de façon décalée les uns des autres, formant un décalage (7) dans une direction d'écoulement du second fluide entre les éléments de surface (3).

7. Échangeur de chaleur (1) selon les revendications 2 et 6, **caractérisé en ce que** le tube (2) de l'échangeur de chaleur à tubes à ailettes est réalisé sous la forme d'un tube ovale dont la section transversale est formée par deux demi-cercles et deux lignes droites reliant les demi-cercles, les éléments de surface (3) de forme ovale étant disposés dans un plan orthogonal à un axe longitudinal du tube et les éléments de surface adjacents (3) étant disposés parallèlement les uns aux autres.

8. Échangeur de chaleur (1) selon la revendication 7, **caractérisé en ce que** la longueur de la ligne droite (8) de la section transversale du tube ovale est au moins une fois supérieure, en particulier 2,5 fois supérieure au diamètre (9) du demi-cercle de la section transversale du tube ovale.
